# EUROPÄISCHE PATENTSCHRIFT

(11) **EP 4 045 387 B1**
(45) Veröffentlichungstag und Bekanntmachung des Hinweises auf die Patenterteilung: **24.05.2023**
(21) Anmeldenummer: 20757891.5
(22) Anmeldetag: 17.08.2020
(51) Int. Cl.: B62D 25/14

(54) **KRAFTFAHRZEUG**
MOTOR VEHICLE
VÉHICULE AUTOMOBILE

(30) Priorität: 14.10.2019 DE 102019127570
(43) Veröffentlichungstag der Anmeldung: 24.08.2022
(73) Patentinhaber: Audi AG, 85045 Ingolstadt (DE)
(72) Erfinder: NONNENBROICH, Klaus, 85084 Reichertshofen (DE); DESCHLER, Gerhard, 85080 Gaimersheim (DE); SANDOR, Robert, 85049 Ingolstadt (DE)
(86) Internationale Anmeldenummer: PCT/EP2020/073003
(87) Internationale Veröffentlichungsnummer: WO 2021/073798

(56) Entgegenhaltungen:
- EP-A1- 1 637 387
- EP-A1- 2 177 424
- EP-A2- 1 245 429

## Beschreibung

Die Erfindung betrifft ein Kraftfahrzeug, umfassend einen sich quer zur Fahrzeuglängsrichtung streckenden Querträger und eine auf diesem angeordnete Instrumententafel, die zum Fahrzeuginnenraum gerichtet ist.

Kraftfahrzeuge verfügen bekanntlich über eine Instrumententafel, die sich im Innenraum im Bereich zwischen den beiden A-Säulen erstreckt. Die Instrumententafel umfasst zum einen das Kombiinstrument mit diversen Anzeigen, das im Bereich vor dem Fahrer positioniert ist. Oft schließt sich dem ein im mittleren Tafelbereich vorgesehener Abschnitt mit einem Display, das entweder starr verbaut ist, beispielsweise in die Tafel integriert ist, oder oberseitig von dieser absteht, oder das versenkbar und aus der Tafel herausfahrbar angeordnet ist, an. Zur Beifahrerseite hin streckt sich zumeist ein über eine Klappe verschließbares Ablagefach. Die Instrumententafel ist auf einem Querträger angeordnet, oft auch Modulquerträger genannt, der ebenfalls im Bereich zwischen den A-Säulen angeordnet und karosseriefest montiert ist. Der Modulträger ist üblicherweise ein Hohlkörper, der sich weitgehend geradlinig zwischen den A-Säulen erstreckt. Aufgrund seiner hohlen Struktur ist er hinreichend stabil, um die Instrumententafel zu tragen, was seine zentrale Aufgabe ist. Ein solcher Modulquerträger ist beispielsweise aus DE 10 2016 200 053 A1 bekannt.

Die Integration des Displays oder Bildschirms in oder an der Instrumententafel, also die feste Montage oder die aus- und einfahrbare Anordnung, ermöglicht lediglich die Benutzung relativ kleiner Displays respektive Bildschirme, da nicht genügend Bauraum zur Verfügung steht, größere Bildschirme zu integrieren.

Aus EP 2 177 424 A1 ist ein Querträger für ein Kraftfahrzeug bekannt, der sich in horizontaler Richtung quer zur Fahrzeuglängsachse erstreckt. An dem Querträger können weitere Gegenstände, etwa eine Instrumententafel, befestigt sein.

EP 1 245 429 A2 offenbart eine Anzeigevorrichtung für ein Fahrzeug. Die Anzeigevorrichtung umfasst einen Bildschirm aus einem flexiblen Material, der in einem gekrümmten Kanal unter einer Abdeckung geführt ist. Der Bildschirm ist über eine Bewegung entlang dieses Kanals in eine flache Betrachtungsposition überführbar.

Eine weitere, ein flexibles Display aufweisende Anzeigevorrichtung für ein Fahrzeug ist aus EP 1 637 387 A1 bekannt. Das Display ist aus einer Hülse aus- und in diese einrollbar, wobei die Hülse im Bereich eines Armaturenbretts vorgesehen ist.

Der Erfindung liegt damit das Problem zugrunde, dem gegenüber verbessertes Kraftfahrzeug mit der Möglichkeit zur Integration eines größeren Bildschirms anzugeben.

Zur Lösung dieses Problems ist bei einem Kraftfahrzeug der eingangs genannten Art erfindungsgemäß vorgesehen, dass im Inneren des zumindest abschnittsweise hohlen Querträgers ein auf- und abwickelbarer Bildschirm angeordnet ist, der über eine Öffnung im Querträger und in der Instrumententafel in den Fahrzeuginnenraum bewegbar ist.

Das erfindungsgemäße Verfahren sieht die zusätzliche Nutzung des Querträgers bzw. Modulquerträgers, der zumindest abschnittsweise, vorzugsweise über seine gesamte Länge, hohl ist, als Aufbewahrungsraum für eine flexiblen, auf eine Wickelwelle auf- und von dieser abwickelbaren Bildschirm vor. In den hohlen Querträger wird die Wickelwelle samt aufgewickeltem Bildschirm eingebracht und fixiert. Zum Bewegen des Bildschirms aus dem Querträger weist dieser eine Öffnung auf, vorzugsweise einen länglichen, schmalen Schlitz, der hinreichend breit ist, um den Bildschirm herauszubewegen. Der trägerseitigen Öffnung respektive dem Schlitz ist eine entsprechende Öffnung, auch hier vorzugsweise eine entsprechender länglicher Schlitz, in der Instrumententafel nachgeschaltet, über den der Bildschirm in den Fahrzeuginnenraum bewegt werden kann. Dies ermöglicht es einerseits, den Modulquerträger mit einer zusätzlichen Funktion zu nutzen. Andererseits besteht die Möglichkeit, auch einen großen Bildschirm zu verwenden, da erfindungsgemäß der Bildschirm nicht mehr in der Instrumententafel integriert ist, sondern im länglichen Modulquerträger, der eine Länge aufweist, die näherungsweise der der Instrumententafel entspricht. Je nach Größe des Hohlraums kann also ein beachtlich langer oder, gesehen in Fahrzeuglängsrichtung, breiter Bildschirm verwendet werden, der in den Fahrzeuginnenraum bewegt respektive in diesem aufgespannt werden kann. Eine Bauraumbeschränkung seitens der Instrumententafel ist, nachdem in dieser lediglich ein entsprechender länglicher Schlitz zum Ausfahren des Bildschirms vorzusehen ist, nicht mehr gegeben.

Die Integration des flexiblen, wickelbaren Bildschirms in den hohen Querträger ist ohne weiteres möglich, da aufgrund seiner Flexibilität der Bildschirm auch mit kleinem Wickelradius auf die Wickelwelle gewickelt werden kann, so dass er ohne Probleme in den rohrartigen Querträger integriert werden kann. Der Querträger ist demzufolge eine Art Rohr-Bildschirmrollo-Kombination. Dabei ist der Bildschirm bevorzugt gegen eine Rückstellkraft von der Wickelwelle abwickelbar, also im Fahrzeuginneren aufspannbar. Diese Rückstellkraft, die über geeignete Federelemente aufgebaut werden kann, unterstützt die Einziehbewegung des rolloartigen Bildschirms, so dass das korrekte Aufwickeln sichergestellt ist.

Wie beschrieben wird der Bildschirm aus einer an der Instrumententafel vorgesehenen Öffnung, bevorzugt natürlich ein länglicher, schmaler Schlitz, herausbewegt. Damit diese Öffnung bei Nichtgebrauch des Bildschirms möglichst wenig auffällt, ist an der Oberseite des Bildschirms bevorzugt eine Abdeckung angeordnet, die bei aufgewickeltem Bildschirm die Öffnung in der Instrumententafel schließt. Das heißt, dass die Oberseite oder Oberkante des Bildschirms mit einer entsprechenden, beispielsweise leistenartigen Abdeckung versehen ist, die bei aufgewickeltem Bildschirm an der Instrumententafel anschließt und die Öffnung schließt. Ist die leistenförmige Abdeckung in derselben Farbe wie die Instrumententafel ausgeführt, so ist sie optisch kaum sichtbar, wenn der Bildschirm eingezogen ist. Darüber hinaus kann über diese Abdeckung auch eine Wegbegrenzung realisiert werden, da die Abdeckung in der aufgewickelten Endstellung gegen die Instrumententafel läuft, worüber die Aufwickelbewegung begrenzt werden kann.

Der Querträger selbst ist wie ausgeführt ein rohrförmiger Hohlkörper, der eine hinreichende Stabilität respektive Steifigkeit gegen Biegung oder Torsion besitzt, da er einerseits die Instrumententafel tragen soll, andererseits aber gegebenenfalls auch sonstige einwirkenden Kräfte abstützen soll. Durch die Ausbildung der Öffnung respektive des länglichen Schlitzes wird der Querträger jedoch geschwächt, das heißt, seine Steifigkeit beziehungsweise Festigkeit wird hierdurch reduziert. Um dennoch eine hinreichende Steifigkeit respektive Festigkeit des Querträgers sicherzustellen, sind in zweckmäßiger Weiterbildung der Erfindung am Querträger ein oder mehrere Versteifungselemente angeordnet oder Versteifungsstrukturen einteilig angeformt. Beispielsweise ist es denkbar, an den üblicherweise metallenen Querträger ein oder mehrere Versteifungselemente anzuschweißen. Denkbar ist es auch, an den Querträger bereits bei seiner Herstellung beziehungsweise Formgebung einteilig entsprechende Versteifungsstrukturen wie Rippen oder Materialverdickungen oder ähnliches anzuformen. Dies ist sowohl bei einem metallenen Querträger als auch bei einem aus einem Kunststoff- oder einem Verbundwerkstoff bestehenden Querträger ohne weiteres möglich. Auch ist es denkbar, insbesondere an einen metallenen Querträger ein oder mehrere Versteifungselemente aus Kunststoff oder einem Verbundwerkstoff wie einem glasfaser- oder kohlefaserverstärkten Werkstoff anzuformen respektive daran anzuordnen, also ein Hybridbauteil auszubilden. Ziel jeder Maßnahme ist es, die Steifigkeit, insbesondere bezüglich einer Torsion des Trägers, zu erhöhen, so dass die Steifigkeit wenigstens der entspricht, wie sie der Querträger ohne Ausbildung der vorzugsweise schlitzartigen Öffnung hat.

In einer besonders einfach Erfindungsausgestaltung kann der Bildschirm manuell, also von Hand, aus seiner eingefahrenen Position herausgezogen und in eine ausgefahrene Position gebracht werden. Dies kann dadurch erfolgen, dass beispielsweise die Abdeckung ein entsprechendes Handhabungselement wie einen schwenkbaren Griff oder dergleichen aufweist, das mit der Hand gegriffen werden kann, so dass der Bildschirm ausgezogen werden kann, wobei dieses Handhabungselement beispielsweise an einem im Bereich eines Rückspiegels oder im Bereich der oberhalb der Windschutzscheibe befindlichen Innenraumverkleidung angeordneten Befestigungselement wie einem Haken oder dergleichen eingehängt werden kann. Alternativ und erfindungsgemäß bevorzugt aber ist zum automatischen Aus- und Einfahren des Bildschirms eine über wenigstens ein Stellelement bewegbare Stellmechanik vorgesehen, die mit dem Bildschirm gekoppelt ist. Das heißt, dass eine entsprechende Kinematik vorgesehen ist, die über eine Steuerungseinstellung gesteuert, den Bildschirm automatisch zwischen der eingefahrenen und einer ausgefahrenen Position verbringt. Die Steuerungseinstellung steuert das Stellelement entsprechend an, das daraufhin die Stellmechanik betätigt, so dass es zum Aus- oder Einfahren kommt. Eine Interaktion, außer gegebenenfalls die Gabe des Steuerbefehls, seitens eines Insassen ist hierbei nicht erforderlich.

Die Stellmechanik respektive die Kinematik muss derart ausgelegt sein, dass sie in der Lage ist, den Bildschirm stabil aufzuspannen und zwischen der eingefahrenen Position und einer maximalen Ausfahrposition bewegen zu können, wobei der Bildschirm während dieser Verstellbewegung vollständig von der Stellmechanik geführt werden muss. Um dies zu ermöglichen, kann gemäß einer ersten Erfindungsalternative die Stellmechanik einen oder mehrere mit dem Bildschirm verbundene Schwenkarme umfassen, der oder die über das Stellelement zwischen einer eingeschwenkten Stellung, in der der Bildschirm aufgerollt ist, und einer ausgeschwenkten Stellung, in der der Bildschirm abgewickelt und ausgefahren ist, bewegbar sind. Der oder die Arme sind demzufolge aus einer quasi eingeklappten, beispielsweise näherungsweise horizontalen Position in eine ausgeklappte und den Bildschirm aufspannende Stellung, beispielsweise näherungsweise einer Vertikalstellung, bewegbar, gesteuert über das Stellelement. Der oder die Schwenkarme sind demzufolge ähnlich wie Scheibenwischerarme bewegbar, wobei hierfür der oder die in jeweils einer Schwenkachse schwenkgelagerten Schwenkarme über ein Gestänge im Stellelement, beispielsweise einen Elektromotor, gekoppelt sind. Dieses Gestänge ist der Gestalt, dass die Drehbewegung des Elektromotors in eine entsprechende Linearbewegung seitens des Gestänges umgesetzt wird, das mit dem oder den Schwenkarmen verbunden ist, die über diese Linearbewegung wiederum verschwenkt werden.

Dabei können bei Verwendung zweier Schwenkarme die Schwenkarme parallel verschwenken, also in die gleiche Richtung bewegt werden, wenn der Bildschirm aufzuspannen oder einzufahren ist. Alternativ dazu können Sie auch in entgegengesetzte Richtungen, das heißt, der eine nach links und der andere nach rechts, aufgeschwenkt oder eingeschwenkt werden.

Alternativ zur Verwendung eines oder zweier Schwenkarme ist es auch denkbar, dass die Stellmechanik wenigstens ein Scherengestänge aufweist, das mittels des Stellelements zwischen einer zusammengeschobenen Stellung, in der der Bildschirm aufgerollt ist, und einer ausgeschobenen Stellung, in der der Bildschirm abgewickelt und ausgefahren ist, bewegbar ist. Auch ein solches Scherengestänge ermöglicht eine entsprechende Linearverstellung, indem die Gestängebauteile gegeneinander verschwenkt werden. Auch hier ist das Scherengestänge mit dem Stellelement über eine geeignete Mechanik gekoppelt, beispielsweise einen Spindeltrieb oder ähnliches, wobei das Stellelement, wiederum beispielsweise der Elektromotor, in diesem Fall beispielsweise eine Gewindespindel antreibt, auf der eine Spindelmutter läuft, die wiederum mit dem Scherengestänge gekoppelt ist.

Während auch hier nur ein Scherengestänge vorgesehen sein kann, ist es jedoch denkbare, zwei Scherengestänge, die im Bereich der seitlichen Enden am Bildschirm angebunden sind, vorzusehen. Diese ermöglichen, wie auch die zwei Schwenkarme, ein symmetrisches Bewegen des Bildschirms, da an zwei Positionen bildschirmseitig die Kraft zum Ausschieben eingeleitet wird.

Die verwendete Stellmechanik ist dabei derart auszulegen, dass sie den Bildschirm aufspannen kann, wobei der Bildschirm am unteren Ende an der Wickelwelle festgelegt ist, gegen die er quasi verspannt wird, wobei die Stellmechanik am oberen Bildschirmende angreift. Weitere Elemente, über die der Bildschirm aufgespannt wird, sind nicht erforderlich.

Die Stellmechanik selbst ist bevorzugt am Querträger befestigt, da dieser eine hinreichend stabile Anbindungsebene bzw. Schnittstelle bietet.

Um über die Stellmechanik die entsprechende Kraft zum Ausfahren des Bildschirms einleiten zu können, ohne dass der Bildschirm hierüber Nachteile erleidet, ist gemäß einer vorteilhaften Weiterbildung der Erfindung vorgesehen, dass die Stellmechanik an einem im Bereich des oberen Endes des Bildschirms angeordneten Verstärkungselements angebunden ist, wobei dieses Verstärkungselement bevorzugt auch gleichzeitig die Abdeckung, die die Schlitzöffnung in der Instrumententafel abdeckt, ist. Das Verstärkungselement und gegebenenfalls auch gleichzeitig das Abdeckelement ist beispielsweise eine entsprechende Leiste, beispielsweise aus einem hinreichend stabilen Kunststoff oder aus Metall, die in geeigneter Weise mit der Stellmechanik gekoppelt ist. Dabei ist, je nach verwendeter Stellmechanik, die Kopplung unterschiedlich. Kommt ein oder kommen zwei Schwenkarme zum Einsatz, so sind diese Schwenkarme im Bereich ihres unteren Endes um eine positionsfeste Schwenkachse gelagert, während sie mit dem oberen, am Bildschirm respektive dem Verstärkungselement angreifenden Ende eine Bewegung beschreiben, die eine entsprechend große Horizontalkomponente aufweist. Das heißt, dass der oder die Schwenkarme nicht fest mit dem Verstärkungselement verbunden sein können, sondern entlang diesem gleiten müssen, was beispielsweise dadurch realisiert werden kann, als das Verstärkungselement als beispielsweise eine Führungsnut aufweisende Leiste ausgeführt ist, in der der oder jeder Schwenkarm über ein Führungselement wie eine Rolle oder ein Gleitelement geführt ist. Anders im Falle der Verwendung eines oder zweier Scherengestänge. Diese beschreiben lediglich eine Linearbewegung, können also entsprechend positionsfest mit dem Leistenverstärkungselement verbunden sein.

Das Stellelement ist zweckmäßigerweise ein Elektromotor, der über eine Steuerungseinrichtung in entsprechender Weise angesteuert werden kann. Er wirkt auf die Stellmechanik ein und ist beispielsweise über eine entsprechende Koppelmechanik wie ein Gestänge oder ähnliches mit dem oder den Schwenkarmen oder dem oder den Scherengestänge verbunden.

Wie beschrieben ist der flexible Bildschirm zwischen einer eingefahrenen Position und einer maximalen Ausfahrposition bewegbar, insbesondere unter Verwendung der Stellmechanik, die ein automatisiertes Verstellen ermöglicht. Dabei ist es denkbar, dass der Bildschirm nur zwischen der eingefahrenen und der maximalen ausgefahrenen Position verstellbar ist. Eine zweckmäßige Weiterbildung der Erfindung sieht jedoch vor, dass der Bildschirm zwischen der aufgerollten Position und einer maximal abgerollten Position verstellbar ist, also zwischen der eingezogenen und der ausgefahrenen Position, und darüber hinaus zusätzlich in diskrete oder beliebige dazwischenliegende Positionen bringbar. Der Bildschirm verläuft in der ausgefahrenen Position eng benachbart zur Windschutzscheibe. Das heißt, er kann in der maximalen Ausfahrposition höhenmäßig nahezu über die gesamte Windschutzscheibenhöhe gespannt werden. Ist er auch entsprechend breit, so erstreckt er sich auch nahezu über die gesamte Windschutzscheibenbreite. In der maximalen Ausfahrposition steht demzufolge die maximale Bildschirmfläche zur Verfügung. Erfindungsgemäß ist es nun aber auch denkbar, den Bildschirm quasi in jede zwischen dieser maximalen Ausfahrposition und der Einfahrposition beliebige Zwischenposition zu bringen, oder in diskrete, ausgezeichnete Zwischenpositionen, beispielsweise auf halbe Höhe oder auf ein Drittel der maximalen Ausfahrhöhe oder dergleichen. Dies ermöglicht es, den Bildschirm respektive die Bildschirmfläche nach Bedarf variieren zu können, was mitunter erforderlich ist.

So ist es in Weiterbildung der Erfindung denkbar, dass die jeweils eingestellte Position in Abhängigkeit einer gegebenen Fahrsituation, eines eingestellten Fahrmodus oder einer anwenderseitig gewünschten Einstellung entsprechend automatisch einstellbar ist. Es sei beispielsweise angenommen, dass das Kraftfahrzeug ein vollständig autonom fahrendes Kraftfahrzeug ist, bei dem also keinerlei Interaktion mehr seitens des Fahrers erforderlich ist. So ist es denkbar, den Bildschirm über seine gesamte Höhe auszufahren. Ist jedoch beispielsweise eine Fahrsituation gegeben, in der das autonom fahrende Fahrzeug auf der Autobahn fährt, so kann es gegebenenfalls für das Befinden der Passagiere zweckmäßig sein, wenn der Bildschirm, auf dem auch in dieser Situation grundsätzlich Inhalte darstellbar sind, etwas eingefahren wird, also beispielsweise auf halbe Höhe oder auf ein Drittel seiner Höhe, um den Insassen noch einen Blick auf das Fahrzeugvorfeld zu ermöglichen, mithin also eine hinreichende Sicht zu gestatten. In der Stadt, wo üblicherweise langsamer gefahren wird, kann der Bildschirm wieder in eine etwas höhere Position gebracht werden, wenn das Fahrzeug autonom fährt.

Auch eine Abhängigkeit der Einstellposition von einem gewählten Fahrmodus ist denkbar. Während bei einem vollständig autonomen Fahrmodus ein maximales Ausfahren des Bildschirms denkbar ist, ist beispielsweise in einem Fall, in dem das Fahrzeug zur Übernahme zumindest eines Teils der Bedienung auffordert, also ein nur teilautonomer Fahrbetrieb gegeben ist, ein Absenken des Bildschirms zweckmäßig, beispielsweise auf eine Höhe von 10-15 Zentimetern bezogen auf die Oberseite der Instrumententafel, so dass der Fahrer einerseits Sicht auf das Fahrzeugvorfeld hat, andererseits aber der Bildschirm nach wie vor als Informationsbildschirm respektive Informationsband dienen kann, an dem entsprechende Informationen beispielsweise bezüglich des Navigationssystems, des Infotainmentssystems oder dergleichen darstellbar sind.

Schließlich kann die entsprechend eingestellte Position aber auch auf Wunsch eines Insassen eingestellt werden. Ist das Fahrzeug beispielsweise im Stand, so kann ein Insasse durch Betätigung eines entsprechenden Bedienelements, beispielsweise an einem entsprechenden Display innerhalb einer Menüführung, beispielsweise den Modus "Kino" anwählen, was dazu führt, dass der Bildschirm vollständig ausgefahren wird und somit die maximale Bildschirmfläche zur Verfügung steht. Falls dies nicht gewünscht wird, kann anwenderseitig beispielsweise der Modus "Info" gewählt werden, bei dem der Bildschirm beispielsweise nur 10-15 Zentimeter ausgefahren wird und nur als länglicher, schmaler Informationsbildschirm verwendet wird. Eine solche anwendergeführte Umstellung kann beispielsweise, gegebenenfalls in gewissen Grenzen, auch bei vollautonomen Fahrbetrieb möglich sein, beispielsweise wenn trotz voll ausgefahrenem Bildschirm, wenn dies beispielsweise die Fahrsituation erlaubt, der Anwender trotzdem einen abgesenkten Bildschirm wünscht.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahrzeuges mit querträgerintegriertem Bildschirm in der eingezogenen Stellung,
- Fig. 2: das Kraftfahrzeug aus Fig. 1 mit ausgefahrenem Bildschirm,
- Fig. 3: eine Prinzipdarstellung des Querträgers mit ausgefahrenem Bildschirm und mit diesem gekoppelter Stellmechanik, im Schnitt,
- Fig. 4: eine Prinzipdarstellung der Instrumententafel mit eingefahrenem und ausgefahrenem Bildschirm,
- Fig. 5: eine Prinzipdarstellung des aufgewickelten Bildschirms mit einer Stellmechanik umfassend zwei Schwenkarme,
- Fig. 6: die Anordnung aus Fig. 5 mit ausgefahrenen Bildschirmen,
- Fig. 7: eine Prinzipdarstellung des aufgewickelten Bildschirms mit einer Stellmechanik einer zweiten Ausführungsform umfassend ein Scherengestänge und
- Fig. 8: die Anordnung aus Fig. 7 im ausgefahrenen Zustand.

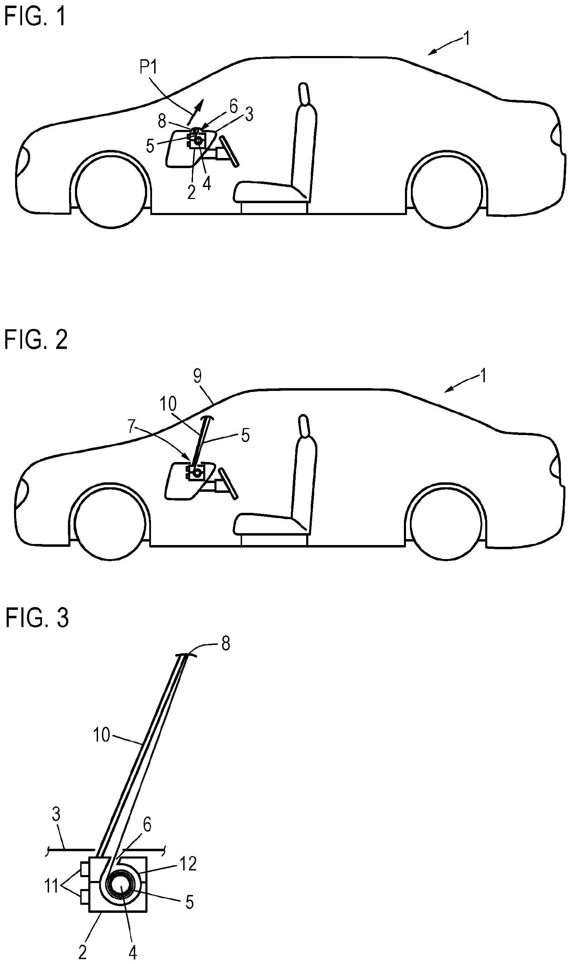

Fig. 1 zeigt die Prinzipdarstellung eines erfindungsgemäßen Kraftfahrzeuges 1, umfassend einen sich quer zur Fahrzeuglängsrichtung erstreckenden Querträger 2, üblicherweise auch Modulquerträger genannt, der in an sich bekannter Weise karosserieseitig befestigt ist und sich im Wesentlichen im Bereich zwischen den beiden A-Säulen der Fahrzeugkarosserie erstreckt. Der Querträger 2 dient als Träger einer Instrumententafel 3, an der in an sich bekannter Weise eine Reihe von Instrumenten und ähnliche Komponenten vorgesehen sind.

In dem erfindungsgemäßen Querträger 2 ist auf einer Wickelwelle 4 aufgewickelt ein flexibler Bildschirm 5 vorgesehen, auf dem, wenn er ausgefahren ist, über eine entsprechende, nicht gezeigte Steuerungseinrichtung gesteuert entsprechende Inhalte dargestellt werden können. Diese Inhalte können beliebiger Natur sein. Beispielsweise ist es möglich, auf dem Bildschirm fahrzeugbezogene Informationen wie Informationen zu einem Navigationssystem, einem Infotainmentsystem oder ähnliches darzustellen, wie auch der Bildschirm quasi als eine "Kinoleinwand" genutzt werden kann, um auf ihm entsprechende Filme oder Bilder zu zeigen. Vornehmlich handelt es sich bei dem Kraftfahrzeug um ein autonom fahrendes Fahrzeug, was jedoch nicht zwingend ist.

Der Bildschirm 5 ist durch eine erste schlitzartige Öffnung 6 im Querträger 2 geführt und läuft auch durch eine zweite schlitzförmige Öffnung 7 in der Instrumententafel 3, wobei diese schlitzartige Öffnung 7 über eine Abdeckung 8, die am oberen Ende des Bildschirms 5 angeordnet ist, in der in Fig. 1 gezeigten, aufgewickelten Stellung abgedeckt ist. Wie durch den Pfeil P1 dargestellt ist, kann nun der Bildschirm 5, vorzugsweise automatisch über eine Steuerungseinrichtung in Verbindung mit einem über sie angesteuerten Stellelement und eine Stellmechanik, aus seiner aufgewickelten Stellung aufgespannt werden, wie in der Prinzipdarstellung gemäß Fig. 2 dargestellt ist. Ersichtlich wurde der Bildschirm 2 vor die Windschutzscheibe 9 gespannt, wobei zum automatischen Aufspannen eine Stellmechanik 10 vorgesehen ist, die im Bereich zwischen Windschutzscheibe 9 und Bildschirm 5, also, vom Fahrer aus gesehen, hinter dem Bildschirm 5, angeordnet ist. Auf dem derart aufgespannten Bildschirm können nun die entsprechenden gemischten Inhalte dargestellt werden.

Das Aufspannen erfolgt bevorzugt gegen eine Rückstellkraft, die automatisch beim Abwickeln des Bildschirms 5 von der Wickelwelle 4 erzeugt wird und die die Einziehbewegung unterstützt und sicherstellt, dass der Bildschirm 5 wieder korrekt auf die Wickelwelle aufgewickelt wird, wenn die Stellmechanik 10 über das hier nicht näher gezeigte Stellelement wieder eingefahren wird. Auch dient die Rückstellkraft quasi als Gegenkraft, über die der Bildschirm 5 nach unten abgespannt wird.

Fig. 3 zeigt eine vergrößerte Prinzipdarstellung des Querträgers 2 mit dem auf der drehbar gelagerten Wickelwelle 4 aufgewickelten Bildschirm 5, der hier in der aufgespannten Position gezeigt ist. Der Querträger 2 ist bevorzugt aus Metall und zumindest abschnittsweise in dem Bereich, in dem die Wickelwelle nebst Bildschirm 5 integriert ist, hohl, vorzugsweise über seine gesamte Länge. An ihm sind im gezeigten Beispiel Verstärkungselemente 11 angeordnet, beispielsweise bei einem metallenen Querträger 2 ebenfalls metallene Verstärkungselemente, die angeschweißt sind, oder Kunststoff- oder Verbundwerkstoffelemente, die angeklebt oder angeformt sind oder ähnliches. Sie dienen dazu die Stabilität respektive Steifigkeit des Querträgers 2 zu erhöhen, die aufgrund der Ausbildung der schlitzförmigen Öffnung 6 etwas reduziert ist.

Im Inneren des Querträgers 2 ist im gezeigten Beispiel eine der Form der Wickelwelle 4 nebst aufgewickeltem Bildschirm 5 angepasste Aufnahme 12 vorgesehen, die unmittelbar in der Öffnung 6 mündet.

Gezeigt ist ferner die hier ausgefahrene Schwenkmechanik 10, die an der Abdeckung 8 befestigt ist respektive an dieser angreift, wobei diese Abdeckung 8 gleichzeitig auch als Verstärkungselement ausgeführt sein kann respektive dienen kann, über das sichergestellt ist, dass die über die Stellmechanik 10 eingeleiteten Kräfte nicht zu einer Beeinträchtigung, zum Beispiel einem leichten Verwerfen der Ebene des flexiblen Bildschirms führen, vielmehr werden diese Kräfte gezielt in die Abdeckung 8 respektive das Verstärkungselement eingeleitet, so dass der Bildschirm 5 beeinträchtigungsfrei mitgenommen und eben aufgespannt werden kann.

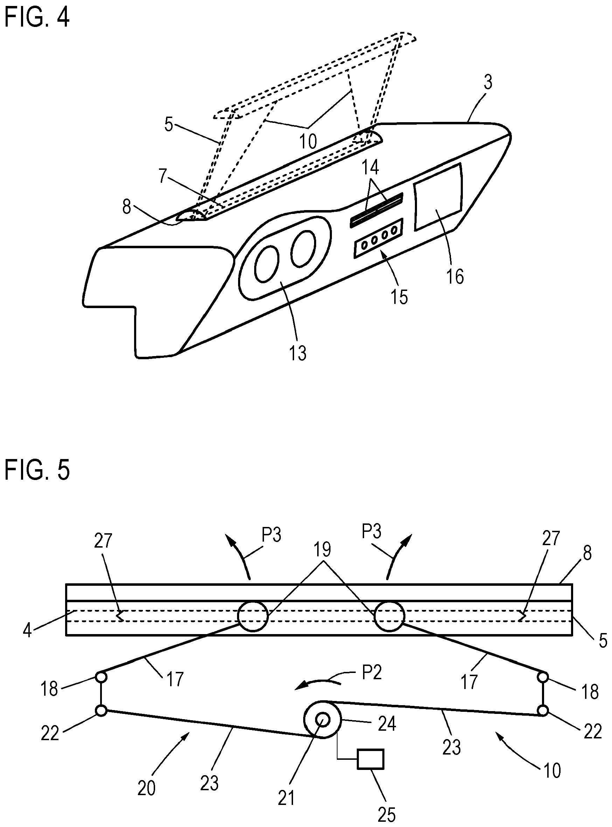

Fig. 4 zeigt eine detailliertere Prinzipdarstellung der Instrumententafel 3, an der exemplarisch ein Kombiinstrument 13 mit entsprechenden Informationsanzeigen angeordnet ist, wie auch beispielsweise Luftausbläser 14, mehrere Bedienelemente 15 sowie ein über eine Klappe verschließbares Handschuhfach 16. Gezeigt ist gestrichelt die schlitzartige längliche Öffnung 7, aus der der Bildschirm 5 herausbewegt wird, die aber hier, nachdem der Bildschirm 5 noch eingezogen ist, über die Abdeckung 8 vollständig abgedeckt ist. Wenngleich die Abdeckung 8 hier überdimensional groß dargestellt ist, sollte die Abdeckung 8, die leistenförmig ist, möglichst schmal, jedoch noch hinreichend stabil sein, um einerseits die Verstärkungsfunktion erfüllen zu können, andererseits aber auch möglichst unauffällig die Schlitzabdeckung zu ermöglichen. Bevorzugt ist sie in der gleichen Farbe ausgeführt wie die Instrumententafel 3, kann sie aber auch aus Designgründen deutlich von dieser absetzen.

Gestrichelt dargestellt ist des Weiteren die Situation, in der der Bildschirm 5 ausgefahren ist. Ersichtlich erstreckt er sich zum Fahrzeuginneren hin und verläuft, siehe auch Fig. 2, benachbart zur Windschutzscheibe 9. Ebenfalls gestrichelt dargestellt ist die zwischen Windschutzscheibe 9 und Bildschirm 5 angeordnete Stellmechanik 10, die hier exemplarisch zwei Schwenkarme umfasst, worauf nachfolgend noch eingegangen wird. Fig. 4 zeigt deutlich, dass der Bildschirm 5 eine erhebliche Breite und Höhe aufweist, mithin also eine große Darstellungsfläche gegeben ist, verglichen mit der extrem kleineren Darstellungsfläche von üblicherweise in der Instrumententafel integrierten Displays, die beispielsweise eine Bildschirmdiagonale von nur 10,1 Zoll aufweisen.

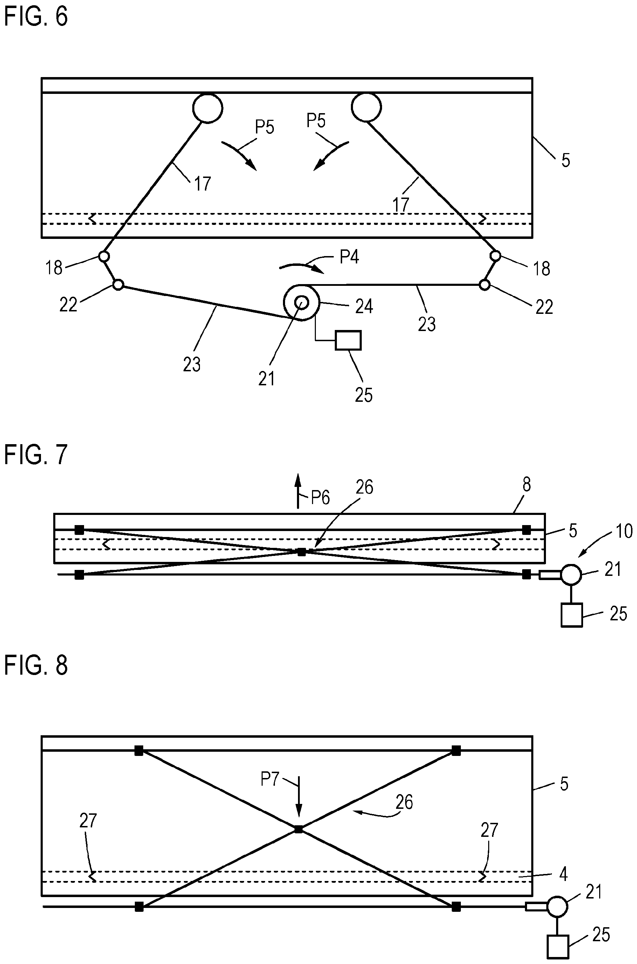

Fig. 5 und 6 zeigen eine erste Variante einer Stelleinrichtung 10, die hier zwei Schwenkarme 17 umfasst, die in entsprechenden Schwenklagerungen 18 beispielsweise am Modulquerträger 2 schwenkgelagert sind. Die Schwenkarme 17 sind über entsprechende Führungselemente 19, beispielsweise Rollen oder Gleitschuhe oder ähnliches, an der Abdeckung 8 des Bildschirms 5 angekoppelt, wozu die Abdeckung 8 beispielsweise eine entsprechende Führungsnut oder ähnliches aufweist, in die die Führungselemente 19 eingreifen.

Vorgesehen ist des Weiteren eine Koppelmechanik 20, über die die Schwenkarme 17 mit einem Stelleelement 21, bevorzugt einem Elektromotor, gekoppelt sind. Diese Koppelmechanik umfasst zwei Koppelarme 22, die in geeigneter Weise mit den Schwenkarmen 17 starr gekoppelt sind, sowie im gezeigten Beispiel zwei Koppelstangen oder Koppelseile 23, die mit einem Zugelement 24, hier einer drehbar gelagerten Rolle, verbunden sind. Wird über eine Steuerungseinrichtung 25 das Stellelement 21, also der Elektromotor angesteuert, so dreht dieser das Zugelement 24, also die Rolle, so dass es zum Anziehen oder Aufwickeln der Koppelstangen oder Koppelseile 23 kommt. Dies ist über den Pfeil P2 dargestellt. Wenn dies erfolgt, schwenken aufgrund der Kopplung über die Verbindungsstangen 22 automatisch die beiden Schwenkarme 17 um die Lagerungen 18, wie durch die Pfeile P3 dargestellt, wobei die Schwenkarme 17 in entgegengesetzte Richtung aufschwenken. Dies führt dazu, dass es aufgrund der Kopplung der Führungselemente 19 mit der Abdeckung 8 diese automatisch mitgenommen und der Bildschirm 5 von der hier nur gestrichelt gezeigten Wickelwelle 4 gegen die Rückstellkraft abgewickelt und damit aus dem nicht näher gezeigten Querträger 2 und der Instrumententafel 3 herausgezogen wird, bis er die in Fig. 6 gezeigte ausgefahrene Maximalposition eingenommen hat.

Die Abwicklung erfolgt gegen eine Rückstellkraft, die über hier nur exemplarisch gezeigte Federelemente 27, die mit der Wickelwelle 4 verbunden sind, beispielsweise entsprechende Schraubenfedern oder Schlingfedern oder ähnliches, aufgebaut wird. Diese beim Ausfahren aufgebaute Rückstellkraft unterstützt die Einfahrbewegung, wenn nämlich über die Steuerungseinrichtung 25 das Einfahren angesteuert wird. In diesem Fall bewegt das Antriebselement 21 das Zugelement 24 in die entgegengesetzte Richtung, wie durch den Fall P4 gezeigt ist, was zu einer entgegengesetzten Bewegung der Schwenkarme 17 führt, wie durch die Pfeile P5 dargestellt ist. Sie werden wieder nach unten geschwenkt, gleichzeitig wird der Bildschirm 5, nicht zuletzt über die Rückstellkraft, wieder auf die Wickelwelle 4 aufgewickelt.

Eine alternative Ausgestaltung der Stellmechanik 10 ist in Figuren 7 und 8 gezeigt. Die Stellmechanik 10 umfasst hier ein Scherengestänge 26, das in geeigneter Weise mit der Abdeckung 8, die auch hier als Verstärkungselement dient, gekoppelt ist. Das Scherengestänge 26 ist hier in der Mitte der Abdeckung 8 angebunden, was ausreichend ist, um den Bildschirm 5 symmetrisch aufzuspannen.

Mit dem Scherengestänge 26 gekoppelt ist wiederum das Antriebselement 21, wiederum bevorzugt ein Elektromotor, der beispielsweise über einen Gewindespindeltrieb mit dem Scherengestänge 26 gekoppelt ist. Wird auch hier über die Steuerungseinrichtung 25 das Antriebselement 21 angesteuert, so wird das Scherengestänge 26 ausgefahren, wie durch den Pfeil P6 dargestellt ist und wie in Fig. 8 gezeigt ist. Hierbei längt sich das in Fig. 7 zusammengeschobene Scherengestänge 26 beachtlich, siehe Fig. 8, was dazu führt, dass der Bildschirm 5 von der auch hier gestrichelt gezeigten Wickelwelle 4 gegen die über die Federelemente 27 aufgebaute Rückstellkraft abgewickelt und aus dem Querträger 2 sowie der Instrumententafel 3 herausgeschoben wird.

Zum Einfahren ist auch hier die Kinematik umgekehrt, das Antriebselement 21 wird angesteuert, damit das Scherengestänge 26 wieder zusammengefahren wird, wie durch den Pfeil P7 dargestellt ist, was dazu führt, dass der Bildschirm 5 über die Rückstellkraft auch wieder auf die Wickelwelle 4 aufgewickelt und eingezogen wird.

Die Figuren 5 und 6 respektive 7 und 8 zeigen das Aufspannen des Bildschirms 5 in die maximale Ausfahrposition. Es ist entweder möglich, dass der Bildschirm 5 nur zwischen der eingezogenen Position (Figuren 5 und 7) und der maximalen Ausfahrposition (Figuren 6 und 8) verstellbar ist. Bevorzugt jedoch kann der Bildschirm 5 auch in eine oder mehrere ausgezeichnete Zwischenpositionen gebracht werden, oder er kann in jeder beliebigen Zwischenposition arretiert werden. Dies kann entweder anwenderseitig gewählt werden, beispielsweise indem ein Anwender über ein entsprechendes Bedienmittel wie einen Touchscreen oder ähnliches entweder eine diskrete Position anwählt, wie beispielsweise "Kino" für eine maximale Ausfahrposition, oder "Info" für eine teilweise eingezogene Position oder ähnliches. Denkbar ist es auch, dass er quasi über eine Art "Slider" als Bedienelement, also ein Schiebeelement, eine beliebige Zwischenposition anwählen kann. Zusätzlich oder alternativ ist es auch denkbar, die entsprechende Zwischenposition automatisch je nach gegebener Fahrsituation (Autobahn, Landstraße, Stadtverkehr) zu variieren, oder je nach gegebenem Fahrmodus (autonom, teilautonom), wobei natürlich auch die unterschiedlichen Verstellmöglichkeiten kumulativ vorgesehen sein können.

Die Information, die am Bildschirm 5 dargestellt wird, wird über eine entsprechende Steuerungseinrichtung bereitgestellt. Es kann sich hierbei um unterschiedlichste Informationen handeln, beispielsweise um fahrzeugbezogene Informationen wie Navigationsdaten, Infotainmentdaten, Daten bezüglich des Fahrwerks, Reifenluftdruckwerte etc. Es können aber auch Filme oder Bilder dargestellt werden. Die Steuerungseinrichtung greift auf die entsprechende Informationsquelle zurück und bereitet die Daten entsprechend für die Bildschirmdarstellung auf. Dabei ist es auch denkbar, in unterschiedlichen Bereichen des sehr großflächigen Bildschirms unterschiedliche Informationen darzustellen, beispielsweise gegebenenfalls auch auf Basis einer anwenderseitig vorgenommenen Konfiguration der Darstellungsfläche. Das heißt, dass hier beliebige Darstellungs- und Variationsmöglichkeiten gegeben sind.

## Patentansprüche

1. Kraftfahrzeug, umfassend einen sich quer zur Fahrzeuglängsrichtung erstreckenden Querträger (2) und eine auf diesem angeordnete Instrumententafel (3), die zum Fahrzeuginnenraum gerichtet ist,
**dadurch gekennzeichnet,**
**dass** im Inneren des zumindest abschnittsweise hohlen Querträgers (2) ein auf- und abwickelbarer Bildschirm (5) angeordnet ist, der über eine Öffnung (6, 7) im Querträger (2) und in der Instrumententafel (3) in den Fahrzeuginnenraum bewegbar ist.

2. Kraftfahrzeug nach Anspruch 1,
**dadurch gekennzeichnet,**
**dass** die Öffnung (6) des Querträgers (2) und die Öffnung (7) der Instrumententafel (3) schlitzartig sind.

3. Kraftfahrzeug nach Anspruch 1 oder 2,
**dadurch gekennzeichnet,**
**dass** an der Oberseite des Bildschirms (5) eine Abdeckung (8) angeordnet ist, die bei aufgewickeltem Bildschirm (5) die Öffnung (7) in der Instrumententafel (3) schließt.

4. Kraftfahrzeug nach einem der vorangehenden Ansprüche,
**dadurch gekennzeichnet,**
**dass** am Querträger (2) ein oder mehrere Versteifungselemente (11) angeordnet oder Versteifungsstrukturen einteilig angeformt sind.

5. Kraftfahrzeug nach einem der vorangehenden Ansprüche,
**dadurch gekennzeichnet,**
**dass** zum automatischen Aus- und Einfahren eine über wenigstens ein Stellelement (21) bewegbare Stellmechanik (10), die mit dem Bildschirm (5) gekoppelt ist, vorgesehen ist.

6. Kraftfahrzeug nach Anspruch 5,
**dadurch gekennzeichnet,**
**dass** die Stellmechanik (10) einen oder mehrere mit dem Bildschirm (5) verbundenen Schwenkarme (17) umfasst, der oder die über das Stellelement (21) zwischen einer eingeschwenkten Stellung, in der der Bildschirm (5) aufgerollt ist, und einer ausgeschwenkten Stellung, in der der Bildschirm (5) abgewickelt und ausgefahren ist, bewegbar sind.

7. Kraftfahrzeug nach Anspruch 6,
**dadurch gekennzeichnet,**
**dass** zwei entgegengesetzt zueinander bewegbare Schwenkarme (17) vorgesehen sind.

8. Kraftfahrzeug nach Anspruch 5,
**dadurch gekennzeichnet,**
**dass** die Stellmechanik (10) wenigstens ein Scherengestänge (26) aufweist, das mittels des Stellelements (21) zwischen einer zusammengeschobenen Stellung, in der der Bildschirm (5) aufgerollt ist, und einer ausgeschobenen Stellung, in der der Bildschirm (5) abgewickelt und ausgefahren ist, bewegbar ist.

9. Kraftfahrzeug nach Anspruch 8,
**dadurch gekennzeichnet,**
**dass** zwei Scherengestänge (26), die im Bereich der seitlichen Enden am Bildschirm (5) angebunden sind, vorgesehen sind.

10. Kraftfahrzeug nach einem der Ansprüche 5 bis 9,
**dadurch gekennzeichnet,**
**dass** die Stellmechanik (10) am Querträger (2) befestigt ist.

11. Kraftfahrzeug nach einem der Ansprüche 5 bis 10,
**dadurch gekennzeichnet,**
**dass** die Stellmechanik (10) an einem im Bereich des oberen Endes des Bildschirms (5) angeordneten Verstärkungselement, insbesondere der Abdeckung (8) angebunden ist.

12. Kraftfahrzeug nach einem der Ansprüche 5 bis 11,
**dadurch gekennzeichnet,**
**dass** das Stellelement (21) ein Elektromotor ist.

13. Kraftfahrzeug nach einem der vorangehenden Ansprüche,
**dadurch gekennzeichnet,**
**dass** der Bildschirm (5) zwischen der aufgerollten Position und einer maximal abgerollten Position verstellbar ist, sowie in diskrete oder beliebige dazwischen liegende Positionen bringbar ist.

14. Kraftfahrzeug nach Anspruch 13,
**dadurch gekennzeichnet,**
**dass** die jeweils eingestellte Position in Abhängigkeit einer gegebenen Fahrsituation, eines eingestellten Fahrmodus oder einer anwenderseitig gewünschten Einstellung entsprechend automatisch einstellbar ist.

## Claims

1. Motor vehicle, comprising a transverse beam (2) extending transversely to the vehicle longitudinal direction and an instrument panel (3) which is arranged on the crossbeam and faces the vehicle interior,
**characterised in that**
inside the transverse beam (2), which is hollow at least in some sections, there is arranged a screen (5) that can be wound up and unwound and can be moved into the vehicle interior via an opening (6, 7) in the transverse beam (2) and in the instrument panel (3).

2. Motor vehicle according to claim 1,
**characterised in that**
the opening (6) in the transverse beam (2) and the opening (7) in the instrument panel (3) are slot-like.

3. Motor vehicle according to claim 1 or 2,
**characterised in that**
a cover (8) is arranged on the upper side of the screen (5), which cover closes the opening (7) in the instrument panel (3) when the screen (5) is wound up.

4. Motor vehicle according to any of the preceding claims,
**characterised in that**
on the transverse beam (2) one or more stiffening elements (11) are arranged or stiffening structures are integrally formed.

5. Motor vehicle according to any of the preceding claims,
**characterised in that**
an actuating mechanism (10) which can be moved via at least one actuating element (21) and is coupled to the screen (5) is provided for automatic extension and retraction.

6. Motor vehicle according to claim 5,
**characterised in that**
the actuating mechanism (10) comprises one or more pivoting arms (17) which are connected to the screen (5) and which are movable via the actuating element (21) between a pivoted-in position in which the screen (5) is rolled up, and a pivoted-out position in which the screen (5) is unwound and extended.

7. Motor vehicle according to claim 6,
**characterised in that**
two pivoting arms (17) are provided which are movable in opposite directions to one another.

8. Motor vehicle according to claim 5,
**characterised in that**
the actuating mechanism (10) has at least one scissor linkage (26) which can be moved by means of the actuating element (21) between a slid-in position in which the screen (5) is rolled up, and a slid-out position in which the screen (5) is unwound and extended.

9. Motor vehicle according to claim 8,
**characterised in that**
two scissor linkages (26) are provided which are attached to the screen (5) in the region of the lateral ends.

10. Motor vehicle according to any one of claims 5 to 9,
**characterised in that**
the actuating mechanism (10) is fastened to the transverse beam (2).

11. Motor vehicle according to any one of claims 5 to 10,
**characterised in that**
the actuating mechanism (10) is attached to a reinforcing element, in particular the cover (8), which is arranged in the region of the upper end of the screen (5).

12. Motor vehicle according to any one of claims 5 to 11,
**characterised in that**
the actuating element (21) is an electric motor.

13. Motor vehicle according to any of the preceding claims,
**characterised in that**
the screen (5) is displaceable between the rolled-up position and a maximally unrolled position, and can be brought into discrete positions or any positions located in between.

14. Motor vehicle according to claim 13,
**characterised in that**
the position set in each case can be set automatically depending on a given driving situation, a set driving mode or a setting desired by the user.

## Revendications

1. Véhicule automobile comprenant une poutre transversale (2) s'étendant transversalement à la direction longitudinale du véhicule et un tableau de bord (3) agencé sur celle-ci qui est dirigé vers l'habitacle du véhicule,
**caractérisé en ce que**
un écran (5) enroulable et déroulable est agencé à l'intérieur de la poutre transversale (2) au moins creuse par sections, lequel est mobile par le biais d'une ouverture (6, 7) dans la poutre transversale (2) et dans le tableau de bord (3) dans l'habitacle du véhicule.

2. Véhicule automobile selon la revendication 1,
**caractérisé en ce que**
l'ouverture (6) de la poutre transversale (2) et l'ouverture (7) du tableau de bord (3) sont en forme de fente.

3. Véhicule automobile selon la revendication 1 ou 2,
**caractérisé en ce que**
un recouvrement (8) est agencé au niveau du côté supérieur de l'écran (5), lequel ferme en cas d'écran (5) enroulé l'ouverture (7) dans le tableau de bord (3).

4. Véhicule automobile selon l'une quelconque des revendications précédentes,
**caractérisé en ce que**
au niveau de la poutre transversale (2), un ou plusieurs éléments de renfort (11) sont agencés ou des structures de renfort sont formées d'un seul tenant.

5. Véhicule automobile selon l'une quelconque des revendications précédentes,
**caractérisé en ce que**
un mécanisme de réglage (10) mobile par le biais d'au moins un élément de réglage (21) qui est couplé à l'écran (5), est prévu pour la sortie et la rentrée automatiques.

6. Véhicule automobile selon la revendication 5,
**caractérisé en ce que**
le mécanisme de réglage (10) comporte un ou plusieurs bras de pivotement (17) reliés à l'écran (5) qui est ou sont mobiles par le biais de l'élément de réglage (21) entre une position pivotée vers l'intérieur, dans laquelle l'écran (5) est enroulé, et une position pivotée vers l'extérieur, dans laquelle l'écran (5) est déroulé et sorti.

7. Véhicule automobile selon la revendication 6,
**caractérisé en ce que**
deux bras de pivotement (17) mobiles à l'opposé l'un de l'autre sont prévus.

8. Véhicule automobile selon la revendication 5,
**caractérisé en ce que**
le mécanisme de réglage (10) présente au moins une tringlerie en ciseaux (26) qui est mobile au moyen de l'élément de réglage (21) entre une position rassemblée, dans laquelle l'écran (5) est enroulé, et une position repoussée, dans laquelle l'écran (5) est déroulé et sorti.

9. Véhicule automobile selon la revendication 8,
**caractérisé en ce que**
deux tringleries en ciseaux (26), qui sont liées dans la zone des extrémités latérales à l'écran (5), sont prévues.

10. Véhicule automobile selon l'une quelconque des revendications 5 à 9,
**caractérisé en ce que**
le mécanisme de réglage (10) est fixé à la poutre transversale (2).

11. Véhicule automobile selon l'une quelconque des revendications 5 à 10,
**caractérisé en ce que**
le mécanisme de réglage (10) est lié à un élément de renforcement agencé dans la zone de l'extrémité supérieure de l'écran (5), en particulier le recouvrement (8).

12. Véhicule automobile selon l'une quelconque des revendications 5 à 11,
**caractérisé en ce que**
l'élément de réglage (21) est un moteur électrique.

13. Véhicule automobile selon l'une quelconque des revendications précédentes,
**caractérisé en ce que**
l'écran (5) est réglable entre la position enroulée et une position déroulée au maximum, et peut être amené dans des positions discrètes ou quelconques se trouvant au milieu.

14. Véhicule automobile selon la revendication 13,
**caractérisé en ce que**
la position respectivement réglée peut être réglée de manière correspondante automatiquement en fonction d'une situation de conduite donnée d'un mode de conduite réglé ou d'un réglage souhaité côté utilisateur.
